# EUROPÄISCHE PATENTANMELDUNG

(11) **EP 3 348 435 A1**
(43) Veröffentlichungstag der Anmeldung: **18.07.2018**
(21) Anmeldenummer: 17151627.1
(22) Anmeldetag: 16.01.2017
(51) Int. Cl.: B60L 3/12, H02P 23/14, B60L 3/00, B60L 3/08, B60W 50/02, B62D 5/04, B60W 10/08, H02P 29/00

(54) **VERFAHREN ZUR ÜBERWACHUNG EINER ELEKTRISCHEN MASCHINE IN EINEM ANTRIEBSSTRANG EINES ELEKTROFAHRZEUGS SOWIE NACH DEM VERFAHREN ARBEITENDE STEUERUNGSEINHEIT**

(71) Anmelder: Siemens Aktiengesellschaft, 80333 München (DE)
(72) Erfinder: Wiedmann, Karsten, 91052 Erlangen (DE)

(57) **Zusammenfassung**

Die Erfindung ist ein Verfahren zur Überwachung einer elektrischen Maschine (12) im Antriebsstrang eines Elektrofahrzeugs und eine danach arbeitende Steuerungseinheit (14), wobei ein angefordertes Drehmoment mit einem tatsächlich von der elektrischen Maschine (12) abgegebenen Drehmoment verglichen wird, wobei als Maß für ein tatsächlich abgegebenes Drehmoment ein geschätztes Drehmoment verwendet wird und wobei die Art der Ermittlung des geschätzten Drehmoments von der Höhe des angeforderten Drehmoments und/oder einer aktuellen Drehzahl der elektrischen Maschine abhängt, so dass bei bestimmten Betriebssituationen auf eine eventuelle Abweichung zwischen dem geschätzten und dem tatsächlich angeforderten Drehmoment sehr schnell reagiert werden kann.

## Beschreibung

Die Erfindung betrifft ein Verfahren zur Überwachung einer elektrischen Maschine in einem Antriebsstrang eines Elektrofahrzeugs und im Weiteren auch eine nach dem Verfahren arbeitende Steuerungseinheit.

Zur Gewährleistung der sogenannten funktionalen Sicherheit der elektrischen Maschine oder einer elektrischen Maschine im Antriebsstrang eines Elektrofahrzeugs ist üblicherweise eine Überwachung des Drehmoments vorgesehen. Viele Ansätze beruhen darauf, das von der oder der jeweiligen elektrischen Maschine abgegebene Drehmoment möglichst genau zu schätzen. Das geschätzte Drehmoment wird beim Betrieb mit dem jeweils angeforderten Drehmoment und/oder mit vorgegebenen oder vorgebbaren Grenzwerten verglichen. Bei einer zu hohen Abweichung des geschätzten Drehmoments vom angeforderten Drehmoment oder bei einer Grenzwertüberschreitung wird ein sicherer Zustand eingeleitet, zum Beispiel indem die elektrische Maschine abgeschaltet wird.

Eine solche Überwachung ist zum Beispiel in einem sogenannten Fahrzeugleitgerät (VCU - Vehicle Control Unit) oder im Inverter der elektrischen Maschine implementiert.

In der Regel wird versucht, nur ein Überwachungsmodul für alle relevanten Betriebspunkte zu implementieren. Die Überwachung des abgegebenen/geschätzten Drehmoments in Relation zu einem jeweils angeforderten Drehmoment ist ein Beispiel für eine mittels eines Überwachungsmoduls durchgeführte Betriebspunktüberwachung. Die Verwendung genau eines Überwachungsmoduls kann jedoch dazu führen, dass nicht immer die jeweils geforderten Genauigkeiten eingehalten werden und/oder dass es zu einer Aktivierung des sicheren Zustands kommt, obwohl dies tatsächlich nicht erforderlich ist.

Ausgehend davon besteht eine Aufgabe der vorliegenden Erfindung darin, ein verbessertes Verfahren zur Überwachung einer elektrischen Maschine in einem Antriebsstrang eines Elektrofahrzeugs anzugeben.

Diese Aufgabe wird erfindungsgemäß mittels eines Verfahrens zur Überwachung einer elektrischen Maschine im Antriebsstrang eines Elektrofahrzeugs mit den Merkmalen des Anspruchs 1 gelöst. Dazu ist bei einem solchen Überwachungsverfahren Folgendes vorgesehen: Ein jeweils zum Beispiel durch Betätigen des Gaspedals angefordertes Drehmoment wird in grundsätzlich an sich bekannter Art und Weise mit einem tatsächlich von der elektrischen Maschine abgegebenen Drehmoment verglichen. Das tatsächlich abgegebene Drehmoment wird nicht direkt gemessen, sondern mit Hilfe von Ersatzmessgrößen des Inverters ermittelt. Beispielsweise kann das Drehmoment mit Hilfe der elektrischen Leistung anhand der Division durch die Rotordrehzahl ermittelt werden. Die elektrische Leistung kann durch die HVAC-Ströme und -Spannungen ermittelt werden.

Das ermittelte Drehmoment wird im Folgenden als geschätztes Drehmoment bezeichnet und der oben genannte Vergleich wird mit dem geschätzten Drehmoment durchgeführt. Beim Betrieb des Elektrofahrzeugs wird demnach das angeforderte Drehmoment mit dem geschätzten Drehmoment als Maß für das tatsächlich abgegebene Drehmoment verglichen. Bei einer einen vorgegebenen oder vorgebbaren Grenzwert überschreitenden Abweichung liegt ein Fehler vor, der eine Ausnahmebehandlung erfordert, zum Beispiel ein Abschalten der elektrischen Maschine oder ein Überführen der elektrischen Maschine in einen sicheren Zustand.

Gemäß der hier vorgeschlagenen Neuerung des Überwachungsverfahrens ist vorgesehen, dass die Art der Ermittlung des geschätzten Drehmoments von der Höhe des angeforderten Drehmoments und/oder einer aktuellen Drehzahl der elektrischen Maschine abhängt und bei einem angeforderten Drehmoment oder einer Drehzahl unterhalb eines vorgegebenen oder vorgebbaren Schwellwerts die notwendige Schätzgenauigkeit der Drehmomentschätzung reduziert wird.

Die Erfindung geht zum Beispiel von einer Fehlersituation aus, die als "Selbstbeschleunigung" bezeichnet werden kann. Dabei betätigt der Fahrer das Gaspedal nicht oder nur wenig und trotzdem beschleunigt das Fahrzeug bzw. beschleunigt das Fahrzeug in erheblichem Umfang. In einer solchen Situation ist das angeforderte Drehmoment Null oder nahe Null, während tatsächlich ein recht hohes Drehmoment abgegeben wird, zumindest ein Drehmoment, das deutlich von Null verschieden ist. In einer solchen Situation kann der Fehler (Abweichung zwischen angefordertem und tatsächlichem/geschätztem Drehmoment) mit ausreichender Sicherheit auch dann erkannt werden, wenn die Drehmomentschätzung mit einer reduzierten Schätzgenauigkeit ausgeführt wird. Die Reduktion der Genauigkeit der Drehmomentschätzung erlaubt aber eine schnellere Ermittlung des geschätzten Drehmoments und damit kann insgesamt schneller auf die Fehlersituation reagiert werden. Eine ähnliche Fehlersituation ergibt sich, wenn das Fahrzeug abgebremst werden soll, wenn also ein negatives Drehmoment angefordert wird, und das Fahrzeug dennoch beschleunigt.

Die Aufgabe wird ebenfalls mittels einer als Steuerungseinheit fungierenden Vorrichtung gelöst, die sich durch Mittel mit einer Implementation des Verfahrens auszeichnet. Insoweit ist die Erfindung auch eine Steuerungseinheit, die nach dem Verfahren wie hier und im Folgenden beschrieben arbeitet und dazu Mittel zur Durchführung des Verfahrens umfasst. Als Steuerungseinheit kommt zum Beispiel der Inverter der elektrischen Maschine in Betracht, welcher zur Ansteuerung der vom Inverter umfassten Halbleiterschalter ohnehin eine Steuerungseinheit aufweist. Die Funktionalität dieser Steuerungseinheit ist zum Beispiel um eine Implementation des hier vorgeschlagenen Ansatzes ergänzt. Alternativ kommt als Steuerungseinheit auch das Fahrzeugleitgerät in Betracht, welches ebenfalls eine Steuerungseinheit umfasst, so dass dessen Funktionalität zum Beispiel ebenfalls um eine Implementation des hier vorgeschlagenen Ansatzes ergänzt werden kann.

Die Erfindung ist optional in Software implementiert. Die Erfindung ist damit einerseits auch ein Computerprogramm mit durch einen Computer oder eine computerartige Steuerungseinheit ausführbaren Programmcodeanweisungen und andererseits ein Speichermedium mit einem derartigen Computerprogramm, also ein Computerprogrammprodukt mit Programmcodemitteln, sowie schließlich auch eine Steuerungseinheit, in deren Speicher als Mittel zur Durchführung des Verfahrens und seiner Ausgestaltungen ein solches Computerprogramm geladen oder ladbar ist.

Das im Folgenden beschriebene Überwachungsverfahren wird beim Betrieb des Elektrofahrzeugs automatisch ausgeführt. Wenn im Folgenden Verfahrensschritte oder Verfahrensschrittfolgen beschrieben werden, bezieht sich dies auf Aktionen der jeweiligen Steuerungseinheit, die zum Beispiel aufgrund eines von dieser ausgeführten Computerprogramms oder unter Kontrolle des Computerprogramms erfolgen.

Anstelle eines Computerprogramms mit einzelnen Programmcodeanweisungen kann die Implementierung des hier und im Folgenden beschriebenen Überwachungsverfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder dem Begriff Computerprogramm auch andere Implementationsmöglichkeiten, nämlich insbesondere eine Implementation in Firmware oder in Firm- und Software oder in Firm- und Hardware, umfasst sind.

Der Vorteil der Erfindung besteht in der schnelleren Erkennung einer Fehlersituation, wenn ein Fahrer eines Elektrofahrzeugs nur ein vergleichsweise geringes Drehmoment, gar kein Drehmoment oder ein negatives Drehmoment anfordert.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche sowie der Beschreibung bei einer näheren Konkretisierung eines Merkmals in einem nachgeordneten Anspruch davon auszugehen, dass eine derartige Beschränkung in den jeweils vorangehenden Ansprüchen sowie einer allgemeineren Ausführungsform des gegenständlichen Überwachungsverfahrens nicht vorhanden ist. Jede Bezugnahme in der Beschreibung auf Aspekte nachgeordneter Ansprüche ist demnach auch ohne speziellen Hinweis ausdrücklich als Beschreibung optionaler Merkmale zu lesen. Schließlich ist darauf hinzuweisen, dass das hier angegebene Verfahren auch entsprechend der abhängigen Vorrichtungsansprüche weitergebildet sein kann und umgekehrt.

Bei einer Ausführungsform des Verfahrens erfolgt bei einem angeforderten Drehmoment und/oder einer Drehzahl der elektrischen Maschine unterhalb eines vorgegebenen oder vorgebbaren Schwellwerts die Ermittlung des geschätzten Drehmoments mittels eines Strommodells und bei einem angeforderten Drehmoment und/oder einer Drehzahl oberhalb des Schwellwerts mittels des Strommodells oder eines Leistungsmodells. Die Drehmomentschätzung, insbesondere die sichere Drehmomentschätzung, kann mittels des Strommodells ausreichend schnell und bei einem angeforderten Drehmoment und/oder einer Drehzahl der elektrischen Maschine unterhalb des Schwellwerts auch mit einer für den Vergleich mit dem angeforderten Drehmoment ausreichenden Genauigkeit ausgeführt werden. Bei dem oben genannten Beispiel der Selbstbeschleunigung wird kein Drehmoment oder allenfalls ein sehr geringes Drehmoment angefordert. Einer der Parameter des Vergleichs des angeforderten Drehmoments mit dem geschätzten Drehmoment ist also Null oder zumindest sehr klein. Auch bei einem für sonstige Betriebssituationen eventuell zu großen Fehler bei der Drehmomentschätzung mittels des Strommodells zeigt der bei einer Selbstbeschleunigung resultierende Schätzwert für das Drehmoment bei einem Vergleich mit dem angeforderten Drehmoment die Fehlersituation eindeutig an.

Bei einer weiteren Ausführungsform des auf der Verwendung eines Strommodells für die Schätzung des Drehmoments bei einem angeforderten Drehmoment unterhalb des Schwellwerts basierenden Verfahrens ist Folgendes vorgesehen: Bei einem angeforderten Drehmoment und/oder einer Drehzahl der elektrischen Maschine oberhalb des Schwellwerts wird das mittels des Strommodells oder des Leistungsmodells ermittelte geschätzte Drehmoment mittels einer ersten Funktionseinheit mit dem angeforderten Drehmoment verglichen. Bei einem angeforderten Drehmoment und/oder einer Drehzahl unterhalb des Schwellwerts wird das mittels des Strommodells ermittelte geschätzte Drehmoment mittels einer von der ersten Funktionseinheit verschiedenen zweiten Funktionseinheit mit dem angeforderten Drehmoment verglichen. Dann erfolgt der Vergleich mit dem angeforderten Drehmoment je nach Höhe des angeforderten Drehmoments bzw. der Drehzahl entweder mittels der ersten Funktionseinheit oder mittels der zweiten Funktionseinheit. Die beiden Funktionseinheiten können in Software, zum Beispiel als Routine oder Unterprogramm eines Computerprogramms, oder in Firmware oder dergleichen ausgeführt sein.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine schematisch vereinfachte Darstellung eines Antriebsstrangs eines Elektrofahrzeugs mit einer davon umfassten elektrischen Maschine,
- FIG 2: eine elektrische Maschine mit einem Elektromotor und einem vorgeschalteten Inverter,
- FIG 3: eine schematisch vereinfachte Darstellung zur Illustration des hier vorgeschlagenen Ansatzes,
- FIG 4: und
- FIG 5: weitere Darstellungen zur Illustration des hier vorgeschlagenen Ansatzes und
- FIG 6: eine schematisch vereinfachte Darstellung zur Illustration einer alternativen Ausführungsform des hier vorgeschlagenen Ansatzes.

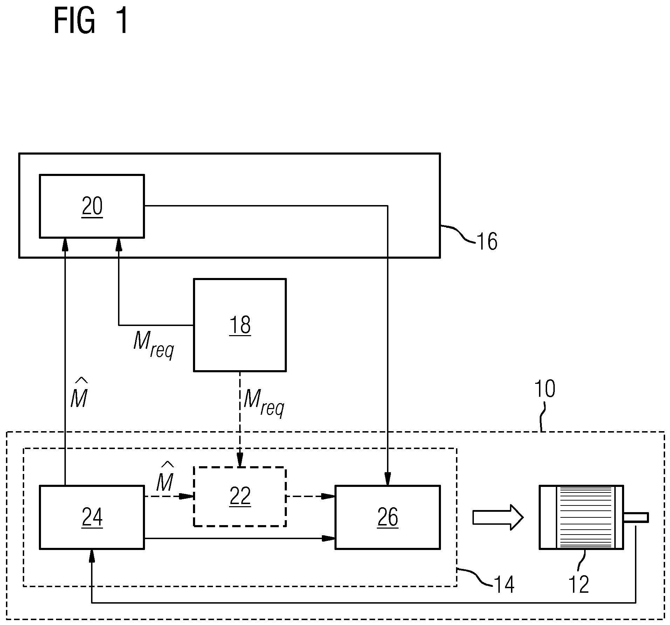

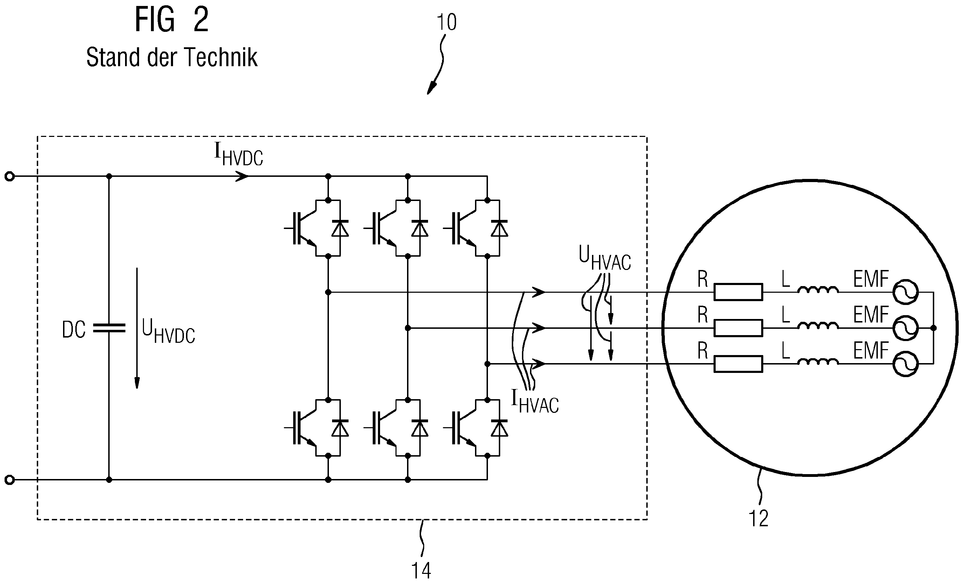

Die Darstellung in FIG 1 zeigt schematisch vereinfacht in einer Übersichtsdarstellung einen Teil eines Antriebsstrangs eines selbst nicht gezeigten Elektrofahrzeugs. Der Antriebsstrang umfasst in an sich bekannter Art und Weise ein in FIG 2 mit weiteren Einzelheiten gezeigtes Antriebssystem 10. Das Antriebssystem 10 umfasst eine elektrische Maschine 12 in Form eines Elektromotors mit einem vorgeschalteten Inverter 14, welcher in ebenfalls grundsätzlich an sich bekannter Art und Weise aus einer Batteriegleichspannung einer nicht gezeigten Fahrzeugbatterie eine Wechselspannung zum Antrieb der elektrischen Maschine erzeugt.
Der Antriebsstrang umfasst des Weiteren ein sogenanntes Fahrzeugleitgerät 16 (VCU - Vehicle Control Unit). Diesem wird mittels eines Sensors 18 ein Messwert für ein zum Beispiel vom Fahrer durch Betätigen des Gaspedals angefordertes Drehmoment *M_{req}* zugeführt. Das angeforderte Drehmoment *M_{req}* wird mit einem geschätzten Drehmoment 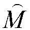 verglichen. Dies kann mittels eines als Teil der Funktionalität des ahrzeugleitgeräts 16 realisierten Vergleichers 20 oder alternativ mittels eines als Teil der Funktionalität des Inverters 14 realisierten Vergleichers 22 erfolgen. Das geschätzte Drehmoment 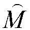 wird mittels einer Vorrichtung zur Drehmomentschätzung 24 geliefert, welche zu diesem Zweck sensorisch zum Erhalt eines Drehzahl- und/oder Rotorlagemesswerts mit der elektrischen Maschine 12 verbunden ist.

Der Drehmomentschätzwert 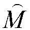 wird als tatsächlich von der elektrischen Maschine 12 abgegebenes Drehmoment verarbeitet (Istwert) und mittels des Vergleichers 20 (oder alternativ mittels des vom Inverter 14 umfassten Vergleichers 22) mit dem geforderten Drehmoments *M_{req}* (Sollwert) verglichen. Bei einer einen vorgegebenen oder vorgebbaren Schwellwert überschreitenden Abweichung wird durch Ansteuerung eines Aktuators 26 ein sicherer Zustand der elektrischen Maschine 12 ausgelöst. Gleiches - nämlich die Ansteuerung des Aktuators 26 zur Auslösung des sicheren Zustands - erfolgt auch dann, wenn im Zusammenhang mit der Ermittlung des Drehmomentschätzwerts 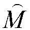 festgestellt wird, dass dieser einen vorgegebenen oder vorgebbaren Grenzwert überschreitet.

Damit der Vergleich des geschätzten Drehmoments 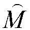 mit dem angeforderten Drehmoment *M_{req}* verlässliche Ergebnisse liefert, muss die Schätzung des Drehmoments mit einer erforderlichen Schätzgenauigkeit erfolgen.

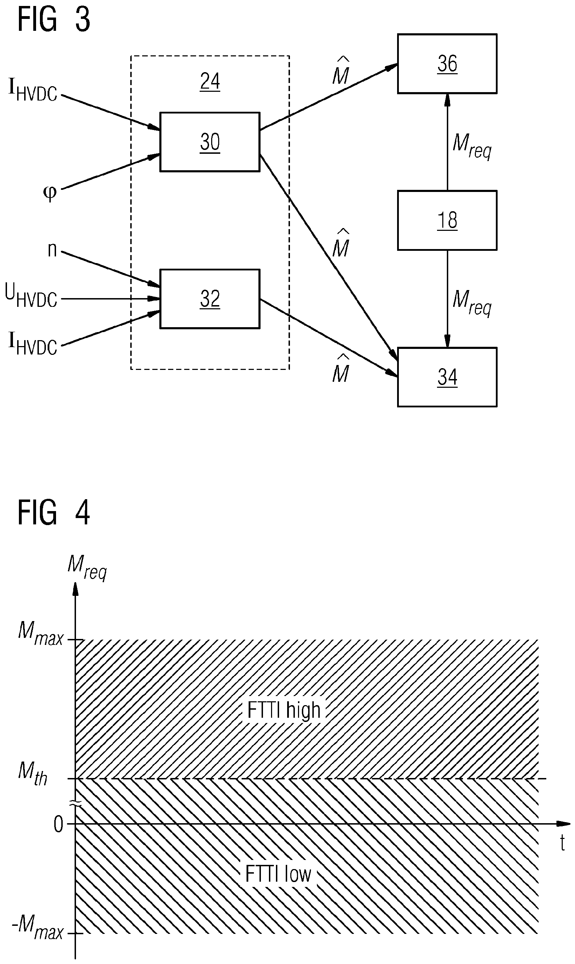

Die Vorrichtung zur Drehmomentschätzung 24 liefert das geschätzte Drehmoment 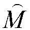 und umfasst gemäß der schematisch vereinfachten Darstellung der Vorrichtung 24 in FIG 3 eine Implementation eines Strommodells 30 der elektrischen Maschine 12 sowie eine Implementation eines Leistungsmodells 32 der elektrischen Maschine 12. Das Strommodell 30 wird bei geringen Geschwindigkeiten des Elektrofahrzeugs, also Geschwindigkeiten unterhalb eines vorgegebenen oder vorgebbaren Schwellwerts, verwendet. Weil das Strommodell 30 bei hohen Geschwindigkeiten die Anforderungen an die Genauigkeit der Schätzung des Drehmoments systembedingt nicht mehr erfüllt, wird bei höheren Geschwindigkeiten des Elektrofahrzeugs, also Geschwindigkeiten oberhalb des Schwellwerts, das Leistungsmodell 32 verwendet. Das Strommodell 30 arbeitet mit den HVAC-Strömen I_{HVAC} (FIG 2) und der Rotorlage ϕ der elektrischen Maschine 12. Das Leistungsmodell 32 arbeitet mit der Drehzahl n der elektrischen Maschine 12 (als Maß für die Geschwindigkeit) sowie der HVDC-Spannung U_{HVDC} (FIG 2) und dem HVDC-Strom I_{HVDC} (FIG 2).

Jedes Modell 30, 32 liefert einen Drehmomentschätzwert 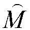 . Bisher wurden die Drehmomentschätzwerte 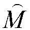 mittels einer Funktionseinheit 34 verarbeitet, nämlich geschwindigkeitsabhängig entweder der Drehmomentschätzwert 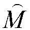 des Strommodells 30 oder der Drehmomentschätzwert 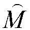 des Leistungsmodells 32 mit einem jeweils angeforderten Drehmoment *M_{req}* verglichen. Bei der Funktionseinheit 34 kann es sich um einen in Hard-, Firm- oder Software ausgeführten Vergleicher oder um eine in Software ausgeführte Vergleichsroutine, die ggf. als Unterprogramm separat aufrufbar ist, handeln.

Gemäß dem hier vorgeschlagenen Ansatz ist vorgesehen, dass bei einem angeforderten Drehmoment *M_{req}* unterhalb eines vorgegebenen oder vorgebbaren Schwellwerts die Drehmomentschätzung mit einer reduzierten, aber ausreichenden Schätzgenauigkeit durchgeführt wird. Dafür wird der Drehmomentschätzwert 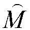 des Strommodells 30 verwendet und dieser mittels einer weiteren (zweiten) Funktionseinheit 36 mit dem angeforderten Drehmoment *M_{req}* verglichen. Bei einem angeforderten Drehmoment *M_{req}* oberhalb des Schwellwerts wird wie bisher der Drehmomentschätzwert 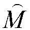 des Strommodells 30 oder des Leistungsmodells 32 verwendet und mittels der (ersten) Funktionseinheit 34 mit dem angeforderten Drehmoment *M_{req}* verglichen. Bei der weiteren, zweiten Funktionseinheit 36 kann es sich ebenfalls um einen in Hard-, Firm- oder Software ausgeführten Vergleicher oder um eine in Software ausgeführte Vergleichsroutine handeln, die insbesondere in Abhängigkeit vom angeforderten Drehmoment *M_{req}* als Unterprogramm separat aufrufbar ist.

Die Darstellung in FIG 4 veranschaulicht das oben Gesagte nochmals graphisch. In dem gezeigten Koordinatensystem ist über der Abszisse die Zeit *t* und über der Ordinate das angeforderte Drehmoment *M_{req}* aufgetragen. Der erfasste Drehmomentbereich reicht bis zu einem maximalen Drehmoment *Mₘₐₓ* und dem negativen Äquivalent des maximalen Drehmoments *-Mₘₐₓ*. Bei einem angeforderten Drehmoment *M_{req}* unterhalb eines vorgegebenen oder vorgebbaren Schwellwerts *Mₜₕ* wird die notwendige Genauigkeit der Drehmomentschätzung (Schätzgenauigkeit) reduziert. Dann befindet sich das angeforderte Drehmoment *M_{req}* in dem in der Darstellung in FIG 4 unten (unterhalb der durch den Schwellwert *Mₜₕ* vorgegebenen Linie) gezeigten Bereich. Zur Reduktion der Genauigkeit der Drehmomentschätzung wird zum Beispiel - wie oben erläutert - nur der Drehmomentschätzwert 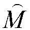 des Strommodells 30 verwendet. Die Reduktion der Schätzgenauigkeit geht mit der Möglichkeit einer schnelleren Detektion von Fehlern einher, so dass sich eine geringere FTTI ("FTTI" bedeutet Fault Tolerant Time Interval) erzielen lässt. Wenn das angeforderte Drehmoment *M_{req}* dagegen oberhalb des Schwellwerts *Mₜₕ* liegt, befindet sich dieses in dem in der Darstellung in FIG 4 oben (oberhalb der durch den Schwellwert *Mₜₕ* vorgegebenen Linie) gezeigten Bereich und für die Drehmomentschätzung werden entweder das Strommodell 30 oder das Leistungsmodell 32 verwendet.

Die beiden durch den Schwellwert *Mₜₕ* voneinander abgegrenzten Bereiche sind in der Darstellung in FIG 4 mit dem Text "FTTI high" bzw. "FTTI low" bezeichnet und die beiden Bezeichner stehen jeweils für einen bestimmten FTTI-Zeitwert, zum Beispiel FTTI high = 500 ms und FTTI low = 250 ms. Der FTTI-Zeitwert definiert die Zeitspanne, innerhalb derer in einem System (hier dem Antriebssystem 10) ein Fehler einer Bearbeitung zugeführt sein muss, um einen gefährlichen Zustand des Systems zu vermeiden. Das FTT-Intervall setzt sich zusammen aus einer Fehlererkennungszeit (FTD - Fault Detection Time) und einer Fehlerreaktionszeit (FRT - Fault Reaction Time): FTTI = FDT + FRT.

Die Kennzeichnung des unteren Bereichs in FIG 4 mit "FTTI low" bedeutet, dass auf einen hier auftretenden eventuellen Fehler zumindest schneller reagiert werden kann als auf einen Fehler bei einem angeforderten Drehmoment *M_{req}* oberhalb des Schwellwerts *Mₜₕ*.

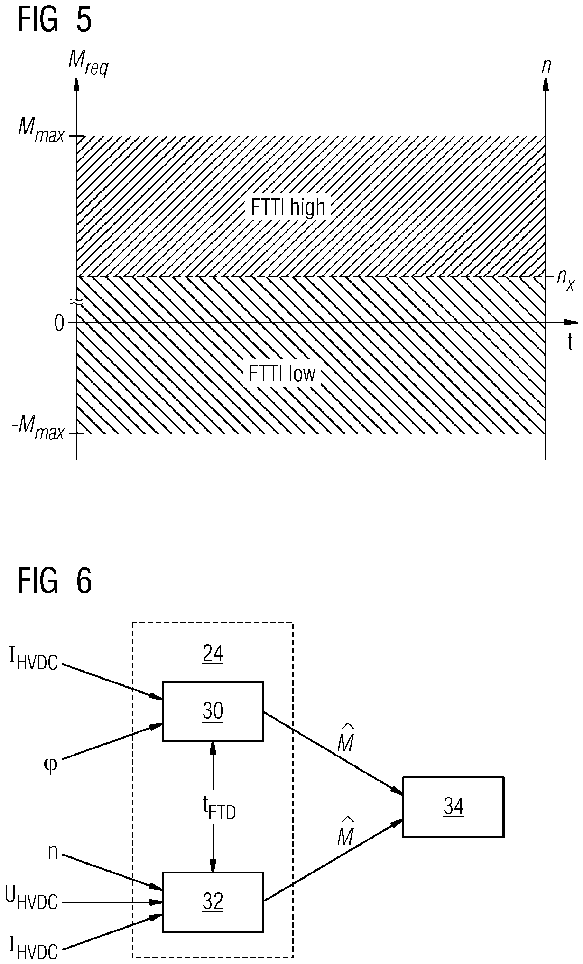

Die Darstellung in FIG 5 veranschaulicht auf Basis der Darstellung in FIG 4 die bereits erwähnte alternativ oder zusätzlich mögliche Abhängigkeit der Art der Ermittlung des geschätzten Drehmoments M^ von der Höhe einer aktuellen Drehzahl der elektrischen Maschine 12. Die Umschaltung zwischen dem Strommodell 30 und dem Leistungsmodell 32 sowie der ersten Funktionseinheit 34 und der zweiten Funktionseinheit 36 erfolgt bei einer vorgegebenen oder vorgebbaren Drehzahl nₓ. Analog zum dem vorstehend Erläuterten ergibt sich unterhalb der Drehzahl nₓ ein reduzierter FTTI-Zeitwert ("FTTI low"), so dass auf einen hier auftretenden eventuellen Fehler zumindest schneller reagiert werden kann als auf einen Fehler bei einer Drehzahl oberhalb der Drehzahl nₓ. Die Verwendung einer Abhängigkeit der Drehmomentschätzung von der Höhe des angeforderten Drehmoments *M_{req}* kann auch mit einer Abhängigkeit von der aktuellen Drehzahl der elektrischen Maschine 12 kombiniert werden, zum Beispiel derart, dass bei *M_{req}* > *M_{g}* oder n < *n_{g}* stets das schnellere Modell 30, also das Strommodell 30, verwendet wird, wobei *M_{g}* und *n_{g}* vorgegebene oder vorgebbare Drehmoment- bzw. Drehzahlgrenzwerte sind, zum Beispiel *M_{g}* = *Mₜₕ* (siehe FIG 4) und *n_{g}* = *nₓ* (siehe FIG 5).

Dass mittels des Strommodells 30 schneller reagiert werden kann, liegt an dessen Robustheit bezüglich Schwankungen der verarbeiteten Eingangssignale. Generell muss jeder von dem Strommodell 30 oder von dem Leistungsmodell 32 verarbeitete Messwert diesem diversitär zur Verfügung gestellt oder mittels einer Plausibilitätsprüfung abgesichert werden. Die diversitären Messwerte werden zur Detektion eventueller Fehler verglichen. Beim Vergleich ist jedoch zum Beispiel die Dynamik der Messwerte zu berücksichtigen. Dies bedeutet, dass nicht jede Abweichung als Fehler interpretiert werden darf. Erst wenn die Abweichung eine gewisse Zeit andauert und/oder eine gewisse Höhe überschreitet, darf dies als Fehler ausgewertet werden. Vorher wird nicht auf einen Fehler erkannt. Ansonsten könnte schon Messrauschen für einen Fehlalarm sorgen. Dies wird als Entprellung ("debouncing") bezeichnet. Die Zeit, während derer kein Fehlersignal erzeugt wird, wird entsprechend als Entprellzeit bezeichnet. Ähnlich verhält es sich bei der Plausibilitätsprüfung. Auch hier darf nur dann auf einen Fehler erkannt werden, wenn der Messwert längere Zeit einer jeweiligen Plausibilitätsprüfung nicht genügt. Die im Rahmen der Entprellung relevante Zeitspanne (Entprellzeit) bestimmt maßgeblich die Robustheit des jeweiligen Modells 30, 32. Bei der Drehmomentschätzung bzw. deren Diagnose kann optional die Entprellzeit als Variable vorgegeben werden. Das Ergebnis einer veränderten Entprellzeit ist eine veränderte FTTI-Zeitspanne. Folglich lässt sich eine Reduktion der FTTI-Zeitspanne und damit eine schnellere Detektion von Fehlern auch mittels einer vorgegebenen oder vorgebbaren reduzierten Entprellzeit erreichen. Dies wird weiter unten nochmals separat erörtert.

Beim Strommodell 30 werden die als Eingangssignale verarbeiteten HVAC-Ströme I_{HVAC} mittels einer Plausibilitätsprüfung abgesichert und diese kann gemäß den Kirchhoffschen-Regeln erfolgen, wonach sich die Summe der Ströme in einem Stromkreis oder an einem Knotenpunkt zu Null addieren muss. Die Messwerterfassung und die Plausibilitätsprüfung kann demnach für das Strommodell 30 sehr schnell erfolgen, während beim Leistungsmodell 32 aufgrund einer größeren Dynamik der verarbeiteten Eingangssignale eine im Vergleich höhere Verarbeitungszeit resultiert. Wird zum Beispiel ein Drehmoment von 150 Nm angefordert, kann durch das jeweilige Sicherzeitsziel gefordert sein, dass nur eine maximale Abweichung von 30 Nm zulässig ist. Dies erfordert eine bestimmte Güte/Genauigkeit der Drehmomentschätzung. Je komplexer die Drehmomentschätzung ist, desto anfälliger ist diese für einen Fehlalarm und eine umso höhere Entprellzeit wird benötigt.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen. Alternativ kann zum Beispiel vorgesehen sein, nur die Amplitude der HVAC-Ströme I_{HVAC} oder die Amplitude des Raumzeigers, der sich mit Hilfe der HVAC-Ströme I_{HVAC} berechnen lässt, zu überwachen. Überschreitet diese einen Schwellwert, wird ein Alarm gesetzt und/der die elektrische Maschine 12 in einen sicheren Zustand überführt. Der Schwellwert wird ermittelt, indem auf Basis des angeforderten Drehmoments *M_{req}* eine zulässige Stromamplitude ermittelt wird.

Eine weitere Möglichkeit zur schnelleren Detektion von Fehlern der oben skizzierten Art besteht in der Verringerung der Entprellzeit in Abhängigkeit vom jeweils angeforderten Drehmoment *M_{req}* und/oder einer jeweils aktuellen Drehzahl der elektrischen Maschine 12. Auch dadurch lassen sich kürze Fehlerreaktionszeiten (geringere FTTI-Zeitwerte) erreichen. Die Verringerung der Entprellzeit kann zum Beispiel im Wege einer Verringerung der in der ISO 26262 definierten Fehlererkennungszeit (FTD) für die sichere Drehmomentschätzung erreicht werden.

Zur Veranschaulichung zeigt die Darstellung in FIG 6 auf Basis der Darstellung in FIG 3 eine Ausführungsform der Vorrichtung zur Drehmomentschätzung 24, bei welcher den verwendeten Modellen 30, 32 als Parameter eine variable Fehlererkennungszeit (t_{FTD}) vorgegeben wird. Eine reduzierte Fehlererkennungszeit (t_{FTD}) führt implizit zu einem verringerten FTTI-Zeitwert. Alternativ kann den Modellen 30, 32 auch der FTTI-Zeitwert direkt als variabler Parameter vorgegeben werden.

Auch hier kann die Verwendung einer Abhängigkeit der Entprellzeit von der Höhe des angeforderten Drehmoments *M_{req}* mit einer Abhängigkeit von einer aktuellen Drehzahl der elektrischen Maschine 12 kombiniert werden, zum Beispiel wie oben beschrieben. Darüber hinaus können beide hier vorgestellten Ansätze zur schnelleren Erkennung einer Fehlersituation, also die Anpassung der Art der Ermittlung des geschätzten Drehmoments und die Anpassung der Entprellzeit jeweils in Abhängigkeit von der Höhe des angeforderten Drehmoments *M_{req}* und/oder einer aktuellen Drehzahl der elektrischen Maschine 12, auch kombiniert werden.

Einzelne im Vordergrund stehende Aspekte der hier eingereichten Beschreibung lassen sich damit kurz wie folgt zusammenfassen: Angegeben werden ein Verfahren zur Überwachung einer elektrischen Maschine 12 im Antriebsstrang eines Elektrofahrzeugs und eine nach dem Verfahren arbeitende Steuerungseinheit 14, insbesondere ein als Steuerungseinheit 14 fungierender Inverter 14. Im Rahmen des Verfahrens wird ein angefordertes Drehmoment mit einem tatsächlich von der elektrischen Maschine 12 abgegebenen Drehmoment verglichen, wobei als Maß für ein tatsächlich abgegebenes Drehmoment ein geschätztes Drehmoment verwendet wird. Gemäß dem hier vorgeschlagenen Ansatz hängt die Art der Ermittlung des geschätzten Drehmoments von der Höhe des angeforderten Drehmoments und/oder einer aktuellen Drehzahl der elektrischen Maschine 12 ab. Dies wird zum Beispiel mittels unterschiedlicher Modelle 30, 32 erreicht, die aufgrund unterschiedlicher Entprellzeiten unterschiedlich schnell sind und damit unterschiedliche FTTI-Zeitwerte zulassen. Aufgrund dieser drehmoment- und/oder drehzahlabhängigen Ermittlungsart kann bei bestimmten Betriebssituationen, zum Beispiel einer sogenannten Selbstbeschleunigung, auf eine eventuelle Abweichung zwischen dem geschätzten und dem tatsächlich angeforderten Drehmoment sehr schnell reagiert werden.

## Patentansprüche

1. Verfahren zur Überwachung einer elektrischen Maschine (12) im Antriebsstrang eines Elektrofahrzeugs,
wobei ein angefordertes Drehmoment mit einem tatsächlich von der elektrischen Maschine (12) abgegebenen Drehmoment verglichen wird und
wobei als Maß für ein tatsächlich abgegebenes Drehmoment ein geschätztes Drehmoment verwendet wird,
**dadurch gekennzeichnet,**
**dass** die Art der Ermittlung des geschätzten Drehmoments von der Höhe des angeforderten Drehmoments und/oder einer aktuellen Drehzahl der elektrischen Maschine (12) abhängt.

2. Verfahren nach Anspruch 1, wobei bei einem angeforderten Drehmoment und/oder einer Drehzahl der elektrischen Maschine (12) unterhalb eines vorgegebenen oder vorgebbaren Schwellwerts die Ermittlung des geschätzten Drehmoments mittels eines Strommodells (30) und bei einem angeforderten Drehmoment und/oder einer Drehzahl oberhalb des Schwellwerts mittels des Strommodells (30) oder eines Leistungsmodells (32) erfolgt.

3. Verfahren nach Anspruch 2, wobei bei einem angeforderten Drehmoment und/oder einer Drehzahl der elektrischen Maschine (12) oberhalb des Schwellwerts das mittels des Strommodells (30) oder des Leistungsmodells (32) ermittelte geschätzte Drehmoment mittels einer Funktionseinheit (34) mit dem angeforderten Drehmoment verglichen wird und bei einem angeforderten Drehmoment und/oder einer Drehzahl unterhalb des Schwellwerts das mittels des Strommodells (30) ermittelte geschätzte Drehmoment mittels einer von der Funktionseinheit (34) verschiedenen weiteren Funktionseinheit (36) mit dem angeforderten Drehmoment verglichen wird.

4. Verfahren nach Anspruch 2 oder 3, wobei eine Entprellzeit des Strommodells (30) und des Leistungsmodells (32) abhängig von der Höhe des angeforderten Drehmoments und/oder einer aktuellen Drehzahl der elektrischen Maschine (12) eingestellt wird.

5. Computerprogramm mit Programmcodemitteln, um alle Schritte des Verfahrens nach einem der Ansprüche 1 bis 4 durchzuführen, wenn das Computerprogramm mittels einer Steuerungseinheit (14) eines Elektrofahrzeugs ausgeführt wird.

6. Computerprogrammprodukt mit Programmcodemitteln, die auf einem computerlesbaren Datenträger gespeichert sind, um alle Schritte des Verfahrens nach einem der Ansprüche 1 bis 4 durchzuführen, wenn das Computerprogrammprodukt mittels einer Steuerungseinheit (14) eines Elektrofahrzeugs ausgeführt wird.

7. Digitales Speichermedium mit elektronisch auslesbaren Steuersignalen, die so mit einer Steuerungseinheit (14) eines Elektrofahrzeugs zusammenwirken können, dass ein Verfahren nach einem der Ansprüche 1 bis 4 ausgeführt wird.

8. Elektrische Maschine (12) mit einem Inverter (14), welcher eine Verarbeitungseinheit und einen Speicher umfasst, wobei in den Speicher des Inverters (14) ein Computerprogramm nach Anspruch 4 geladen ist, das im Betrieb der elektrischen Maschine (12) mittels der Verarbeitungseinheit des Inverters (14) ausgeführt wird.
